# EUROPEAN PATENT APPLICATION

(11) **EP 2 721 921 A1**
(43) Date of publication of application: **23.04.2014**
(21) Application number: 12189050.3
(22) Date of filing: 18.10.2012
(51) Int. Cl.: A01F 25/16, A01F 25/13, A01F 25/20

(54) **Fully enclosed automated feed out system**

(71) Applicant: Hebo Holding B.V., 8517 HH Scharsterburg (NL)
(72) Inventor: Noppert, Jentje, 8501 ZS Joure (NL)
(74) Representative: 't Jong, Bastiaan Jacob

(57) **Abstract**

An automated feed out system includes a bunker silo (102) for storing silage therein and a cover (170) for selectively placing the cover in a covered position thereby covering and sealing silage (111) in the bunker silo. The automated feed out system (100) includes a frame (122) for supporting augers (124, 126) thereon for selectively defacing feed from a feeding face (120) with the cover in a covered position. The automated feed out system also includes conveyors (192) for transporting the defaced feed to a predetermined location.

## Description

The present concept relates to bunker silos in particular the present concept is a fully enclosed automated feed out system.

Bunker silos have become the presently preferred method for storing silage. Bunker silos offer the user reasonable capital cost, high storage volume, quick and easy filling procedures for the storage of silage.

There are however problems which have plagued storage of silage in bunker silos most of which are as a result of the penetration of air, moisture or rodents into the silage overtime. Currently in order to minimize penetration of air and water and rodents into the silage a plastic cover is placed over the silage after it has been compacted into the bunker silo. Normally used tires are placed on top of the cover to keep it in place during the storage season. In the current state of the art as the silage is being consumed at the feed face the cover is rolled back as required. This exposes the feed face to air and water.

There are both manual and mechanized methods of removal of material from the bunker silo. These mechanized and manual removal methods are time consuming and labor intensive and require the removal of the cover at the feed face of the bunker silo.

Machines designed to remove silage and agricultural material from silo bunkers are known in the art and described in for example US Patent 3121488, US Patent 4157164, US Patent 6109552, and US Patent 6591971. All of these patented devices have in common that either the bunker silo has no cover whatsoever in place to protect the silage from moisture and air and/or the cover that is in place must be removed from the feeding face in order for the silage removing equipment to be put in place and made functional.

In addition none of these devices automates the silage removal process to the point where one can effectively reduce labor costs for moving of silage out of a bunker silo and prevent a loss of silage through unwanted penetration of air, water and rodents into the bunker silo.

Therefore there is a need for a fully enclosed automated feed out system which allows one to remove silage from the feeding face without removal of the cover from the feeding face and also having the ability to reduce the labor input required in order to remove silage from the feeding face of a bunker silo.

A fully enclosed automated feed out system comprising a bunker silo for storing silage therein; a cover for selectively placing the cover in a covered position thereby covering and sealing silage in the bunker silo; a means for selectively defacing silage from a feeding face with the cover in a covered position; and a means for transporting the defaced silage to a predetermined location.

Preferably the fully enclosed automated feed out system includes a frame moveable along a longitudinal direction for selectively positioning defacing augers onto the feeding face.

Preferably the frame including a top cross member and a bottom cross member rollable along a longitudinal direction along the bunker silo and having attached thereto an auger sub frame for supporting upright augers thereon.

Preferably the fully enclosed automated feed out system including conveyors for conveying the defaced silage to a predetermined location.

An automated feed out system comprising:
a) a bunker silo aligned along a longitudinal direction, for storing feed therein,
b) a means for selectively placing a cover in a covered position to cover and seal the feed and a feeding face in the bunker silo;
c) a means for selectively defacing feed from a feeding face with the cover in a covered position;
a means for transporting the defaced feed to a predetermined location.

Preferably wherein the defacing means includes a frame moveable along the longitudinal direction for selectively positioning at least one defacing auger onto the feeding face for defacing feed therefrom.

Preferably wherein the frame including at least one upright auger supported by a top cross member and a bottom cross member, the frame roll able along the ongitudinal direction along the bunker silo such that the at least one upright auger incrementally defaces feed from the feeding face in the longitudinal direction.

Preferably wherein the frame including an auger sub frame for connecting the cross members and supporting the at least one upright auger thereon.

Preferably wherein the sub frame adapted to move back and forth in a transverse direction across the feeding face for evenly defacing the feeding face in the transverse direction.

Preferably wherein the frame further including a transversely oriented top auger for defacing a top portion of the feeding face.

Preferably wherein the transporting means including a transversely oriented bottom auger for transporting defaced feed transversely across the bottom of the feeding face.

Preferably wherein the transporting means further including a blower receiving defaced feed from the bottom auger such that defaced feed is transported away from the feeding face by the blower.

Preferably wherein the transporting means including conveyors receiving defaced feed from the blower such that defaced feed is conveyed to a predetermined location.

Preferably wherein the frame including at least two upright augers supported by a top cross member and a bottom cross member, the frame roll able along the longitudinal direction along the bunker silo such that the at least two upright augers incrementally deface feed from the feeding face in the longitudinal direction.

Preferably wherein the frame including an auger sub frame for connecting the cross members and supporting the at least two upright augers thereon.

Preferably wherein the cover means including guard members that prevent the cover from entangling with the defacing means when in the covered position thereby maintaining the seal created by the cover.

Preferably wherein the guard members include transversely oriented horizontal guard members and a transversely oriented top guard member which maintains the cover spaced from the defacing means.

Preferably wherein the cover means including a spool and a cover carriage for rollably receiving the cover onto and off of the spool.

Preferably wherein e frame supported by wheels and including a frame motor for rollably moving the frame longitudinally along the bunker walls.

These and other features of the invention are described in conjunction with the accompanying drawings
Figure la shows a schematically front end elevational view of the fully enclosed automated feed out system with the guard members in place.
Figure 2 is a schematic front end elevational view of the fully enclosed automated feed out system with some of the guard members removed.
Figure 3 is a schematic side elevational partial view of the fully enclosed automated feed out system shown in the covered position.

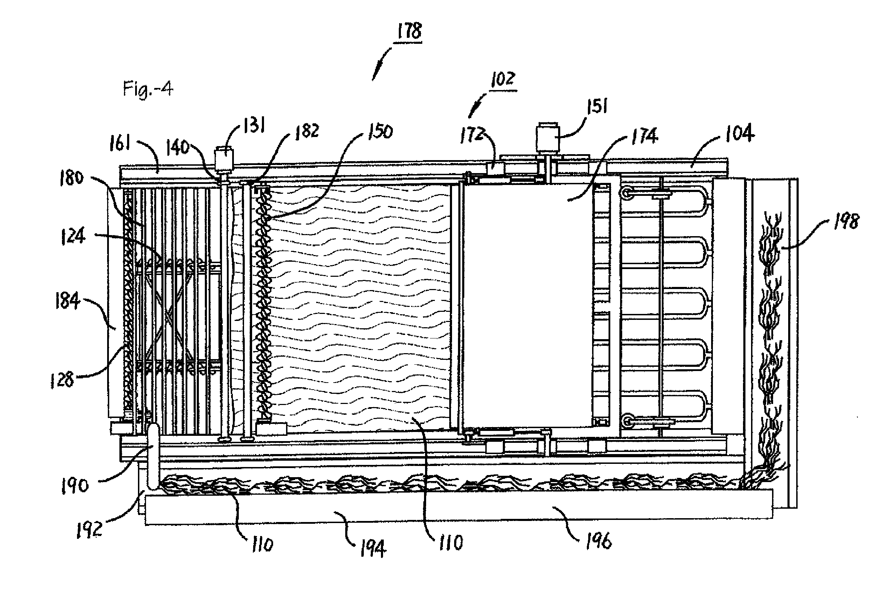

Figure 4 is a schematic top plan view ofa bunker silo system with the cover in the uncovered position.
Figure 5 is a schematic side elevational view of the fully enclosed automated feed out system together with a bunker silo showing the cover in the covered position.

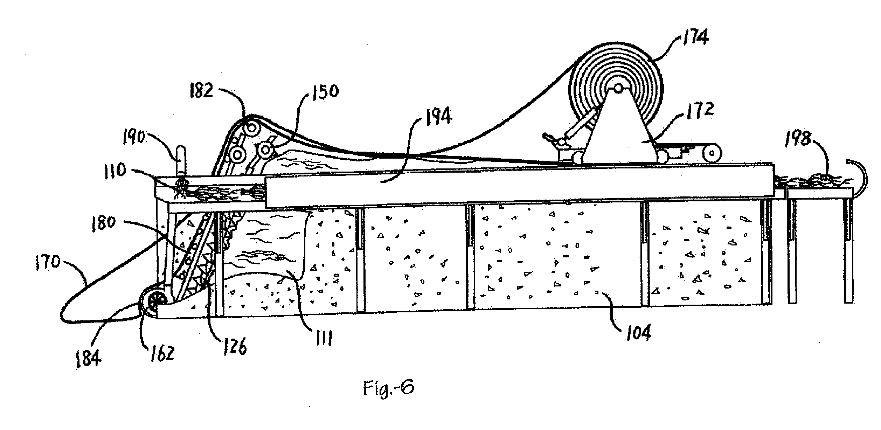

Figure 6 is a schematic side elevational view of the fully enclosed automated feed out system together with a bunker silo showing the cover in the covered position.
Figure 7 is a schematic elevational view of the fully enclosed automated feed out system with the cover in the uncovered position.
Figure 8 is a schematic top plan view of a number of bunker silos arranged side by side and end to end showing the flow of silage from the bunker silos to a silage wagon.

Referring to the attached figures of the present invention a precision feed out system is shown generally as 100 and includes the following major components namely bunker silo 102 typically including 2 bunker walls 104 each wall having a wall top 106 wherein silage 110 is stored between the bunker walls 104.

The feed, in this example is silage. The feed or silage removal portion of the fully enclosed automated feed out system 100 includes a frame 112 supported at the top with top rollers 114 and at the bottom with wheels 116. Frame motor 131 is used to propel frame 112 in a longitudinal direction 118 into bunker silo 102 as the feeding face 120 of silage heap III is slowly removed. It will be noted that in this example the feed is silage but the feed may also be any other feed stored in bunker silos.

Frame 112 is urged in the longitudinal direction 118 to continuously make contact with feeding face 120 as silage 110 is being removed from feeding face 120. Any drive means known in the art could be used including electric or hydraulic drives for all moving components including the augers 124 and 126 and the fame 112.

Frame 112 supports subframe 122 which in tum supports two upright augers, a left upright auger 124 and right upright auger 126 as well as a bottom auger 128 which extends transversely along a transverse direction 130.

Auger subframe 122 includes reinforcing members 132 upright supports 134, which hold in place left upright auger 124 and right upright auger 126.

The top of auger subframe 122 is attached slideably and/or rollably to top cross member 140 at the top end and is attached slideably and/or rollably to bottom cross member 142 at the bottom end.

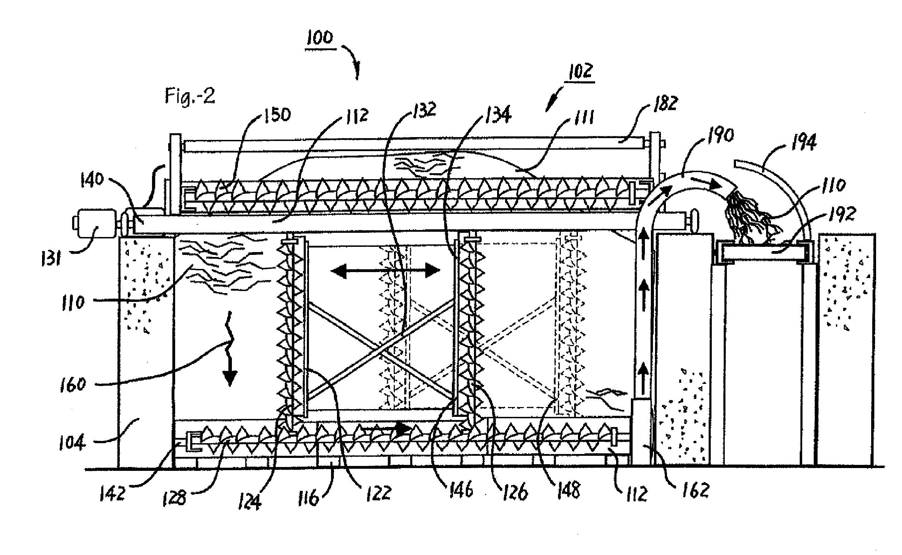

This allows auger subframe 122 to move transversely in the transverse direction 130 across the feeding face 120. Auger subframe 122 is depicted in Figure 2 in a first position 146 and in a second position 148.

Auger subframe 122 in fact can move all the way to each of the bunker walls 104 by transversely moving auger subframe 122 in the transverse direction 130.

Auger subframe 122 is mechanized preferably using hydraulic motors however other drive systems such as electric motor with chain drive and other servo drive mechanisms may also be used to move auger subframe from a left most position wherein left upright auger 124 is almost in contact with bunker wall 104 on the left side to a right most position wherein upright auger 126 is almost in contact with right bunker wall 104. In this manner the upright augers 126 can make full contact with the entire feeding face 120.

In some instances the silage heap 111 can extend above auger subframe 122 in which case a top auger 150 is used. Top auger 150 can be moved upwardly and downwardly along top auger rail 152 in top auger direction 154 thereby being able to remove silage 110 from the top of the silage heap 111 as required.

Therefore in the depicted embodiment left upright auger 124 and right upright auger 126 can cover 80 to 90 per cent of the feeding face 120 of silage 110, the upper most portion of silage 11 0 can be defaced and removed by top auger 150 by moving top auger 150 along top auger direction 154.

In an alternate embodiment not shown left upright auger 124 and the right upright auger 126 are extended upwardly beyond top cross member 140 and in fact can extend as high as the top most position of top auger 150 in which case one can eliminate the need for the use of top auger 150.

As left upright auger 124 and right upright auger 126 and top auger 150 deface or remove silage 110 it falls as schematically depicted by falling silage 160 shown in Figure 2. The silage, which is removed and falls to the bottom portion of bunker silo 102 is collected by bottom auger 128 which conveys and supports the defaced silage 110 to a blower 162. Blower 162 may in fact be an auger or a conveyor or other conveyance device which serves the same purpose as a blower.

Left upright auger 124 and right upright auger 126 as well as top auger 150 are selected and have the ability to remove silage 110 from bunker silo 102 by rotational grinding motion of these augers against the feeding face 120 of silage heap 111.

Bottom auger 128 on the other hand is selected for transportation of the defaced silage from the bottom of bunker silo 102 over to blower 162 where further transport of the silage occurs.

Modem bunker silos 120 include a cover system including a cover 170 for covering silage 110 to minimize and in some cases prevent penetration of air and moisture into silage 110. The cover 170 covers and seals the feed in the silo from air, moisture, rodents and other undesirable factors. The seal although not perfect is preferable over directly exposed feed to air and water as currently occurs during defacing operations. In current state of the art operations the "seal" is broken when the cover is retracted to expose the feeding face 120 in order to deface the feeding face. It would be advantageous to be able to deface the feeding face 120 without having to remove the cover 170 in other words without having to break the seal.

Cover 170 may be constructed of flexible plastic sheet or film but may also be made of rigid plastic or metal panels, or a combination of plastic sheet and rigid panels.

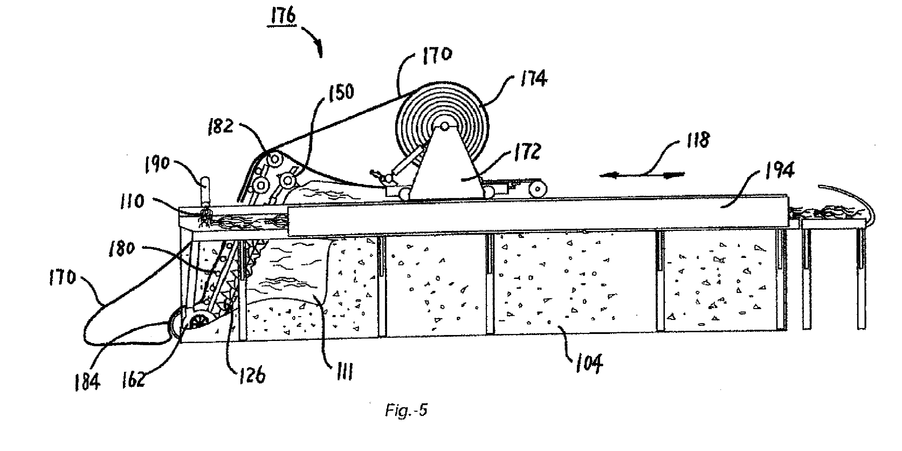

Schematically shown in Figure 5 for example is a cover carriage 172 which includes a cover spool 174 and a motor 151 which either reels in or pays out cover 170 as required.

Cover carriage 172 also moves longitudinally along longitudinal direction and is normally supported on wheels, which travel III a track 161 positioned along wall top 106 of each of the bunker walls 104.

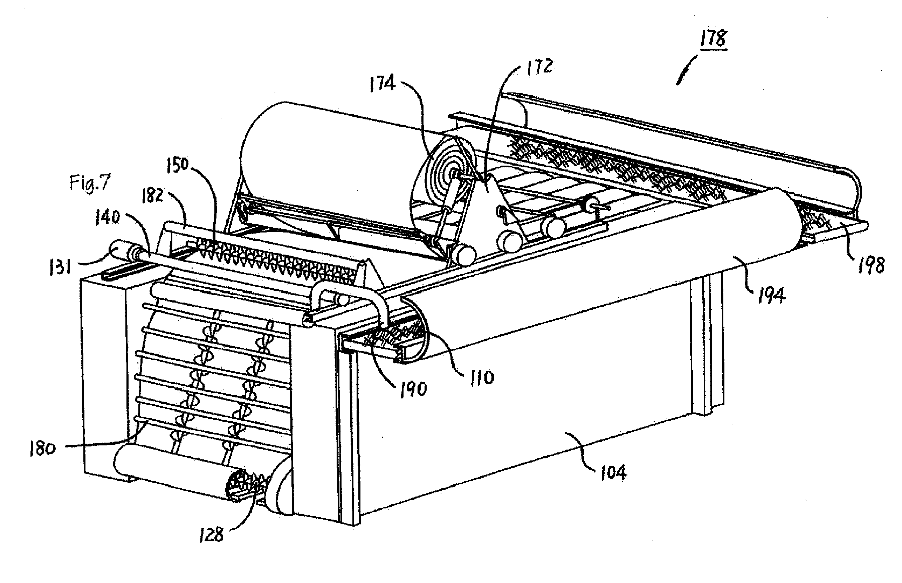

By moving cover carriage 172 and rotating spool 174 one can either pay out to put the cover in the covered position 176 as shown in Figure 5 or put the cover in the uncovered position 178 as shown in Figure 7 schematically.

The Fully enclosed automated feed out system 100 includes guards to ensure that cover 170 does not become entangled into the augers of the feed out system, when in the covered position 176.

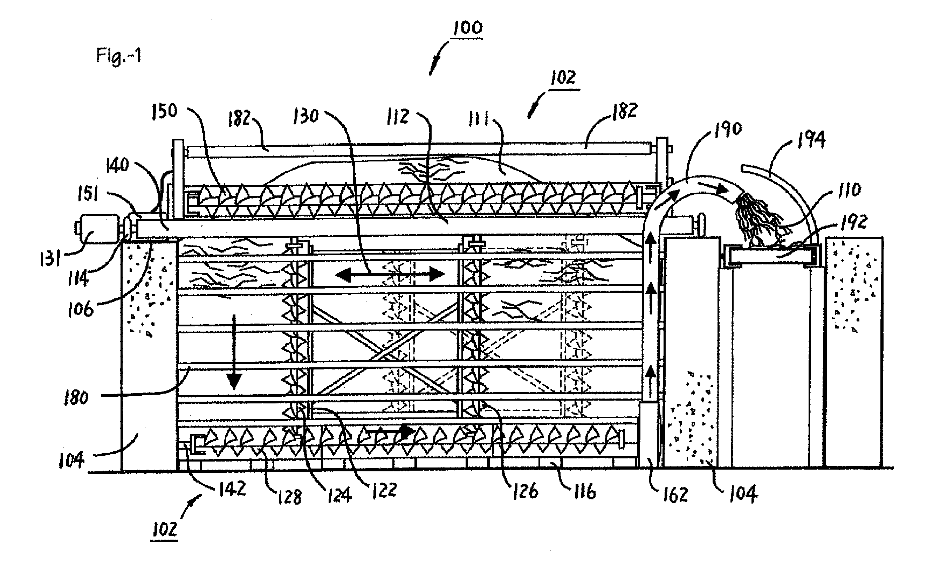

Referring to Figures 1 for example horizontal guard members 180 extend in the transverse direction 130 across the face of bunker silo 102 preventing cover 170 from making contact with left and right upright augers 124 and 126.

Top guard member 182 for example ensures that cover 170 doesn't come into contact with top auger 150.

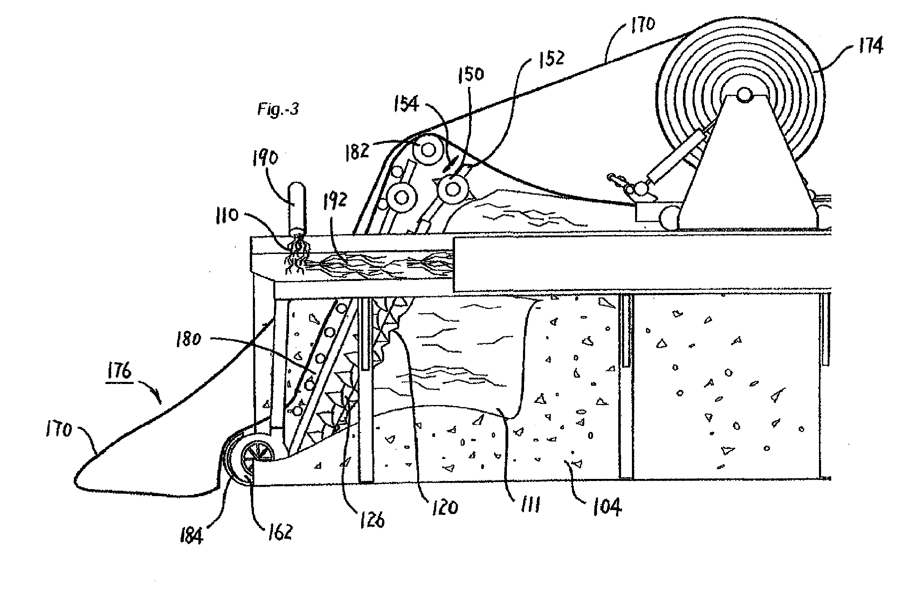

A bottom auger guard 184 schematically depicted in Figure 3 ensures that cover 170 doesn't come into contact with bottom auger 128.

In this manner the reader will note that the Fully enclosed automated feed out system 100 can operate and deface feeding face 120 of silage 110 with cover 170 in the covered position 176. This will minimize the penetration of air and water and rodents into the silage 110 and thereby reduce the amount of spoilage of the silage.

When silage 110 reaches blower 162 it is conveyed via a feed pipe 190 to conveyor 192, which has a conveyor cover 194.

Conveyor 192 may also include a side conveyor 196 which runs along the longitudinal direction 118 of bunker silo 102 and a rear conveyor 198 which runs along transverse direction 130 of bunker silo 102. In this manner the silage which has been defaced from feeding face 120 can be conveyed longitudinally along the bunker silo toward the rear portion of the silo and then transversely along the back of the bunker silo 102.

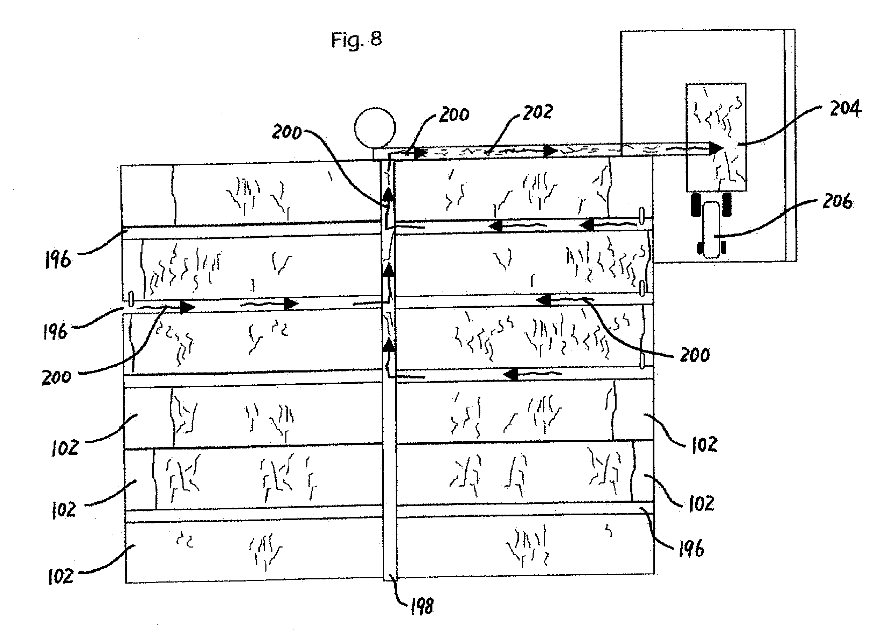

Referring now to Figure 8 which is a schematic top plan view of a number of bunker silos 102 which are positioned side by side and back to back. The arrows 200 depict the movement of silage 110 along the side conveyors 196 and then onward onto rear conveyor 198 and off to exit conveyor 202 which unloads the silage into a silage wagon 204 which is pulled by tractor 206.

It may also be possible that silage 110 can be moved with an exit conveyor 202 directly into a barn for further conveyance throughout the barn for automated feeding.

## Claims

1. Automated feed out system comprising:
a) a bunker silo aligned along a longitudinal direction, for storing feed therein,
b) a means for selectively placing a cover in a covered position to cover and seal the feed and a feeding face in the bunker silo;
c) a means for selectively defacing feed from a feeding face with the cover in a covered position;
d) a means for transporting the defaced feed to a predetermined location.

2. Automated feed out system according to claim 1 wherein the defacing means includes a frame moveable along the longitudinal direction for selectively positioning at least one defacing auger onto the feeding face for defacing feed therefrom.

3. Automated feed out system according to claim 2 wherein the frame including at least one upright auger supported by a top cross member and a bottom cross member, the frame roll able along the longitudinal direction along the bunker silo such that the at least one upright auger incrementally defaces feed from the feeding face in the longitudinal direction.

4. Automated feed out system according to claim 3 wherein the frame including an auger sub frame for connecting the cross members and supporting the at least one upright auger thereon.

5. Automated feed out system according to claim 4 wherein the sub frame adapted to move back and forth in a transverse direction across the feeding face for evenly defacing the feeding face in the transverse direction.

6. Automated feed out system according to claim 5 wherein the frame further including a transversely oriented top auger for defacing a top portion of the feeding face.

7. Automated feed out system according to claim 5 wherein the transporting means including a transversely oriented bottom auger for transporting defaced feed transversely across the bottom of the feeding face.

8. Automated feed out system claimed in claim 7 wherein the transporting means further including a blower receiving defaced feed from the bottom auger such that defaced feed is transported away from the feeding face by the blower.

9. Automated feed out system claimed in claim 8 wherein the transporting means including conveyors receiving defaced feed from the blower such that defaced feed is conveyed to a predetermined location.

10. Automated feed out system according to claim 2 wherein the frame including at least two upright augers supported by a top cross member and a bottom cross member, the frame roll able along the longitudinal direction along the bunker silo such that the at least two upright augers incrementally deface feed from the feeding face in the longitudinal direction.

11. Automated feed out system according to claim 10 wherein the frame including an auger sub frame for connecting the cross members and supporting the at least two upright augers thereon.

12. Automated feed out system according to claim 2 wherein the cover means including guard members that prevent the cover from entangling with the defacing means when in the covered position thereby maintaining the seal created by the cover.

13. Automated feed out system according to claim 12 wherein the guard members include transversely oriented horizontal guard members and a transversely oriented top guard member which maintains the cover spaced from the defacing means.

14. Automated feed out system according to claim 2 wherein the cover means including a spool and a cover carriage for rollably receiving the cover onto and off of the spool.

15. Automated feed out system according to claim 2 wherein the frame supported by wheels and including a frame motor for rollably moving the frame longitudinally along the bunker walls.
